# EUROPEAN PATENT APPLICATION

(11) **EP 1 319 330 A1**
(43) Date of publication of application: **18.06.2003**
(21) Application number: 02258429.6
(22) Date of filing: 06.12.2002
(51) Int. Cl.: A01D 34/695, A01D 34/82

(54) **Air-supported lawn-mower**

(30) Priority: 14.12.2001 GB 0129997
(71) Applicant: ELECTROLUX OUTDOOR PRODUCTS LIMITED, Newton Aycliffe, County Durham DL5 6UP (GB)
(72) Inventor: Keyton, Richard, Newton Aycliffe, County Durnham DL5 7LL (GB)
(74) Representative: Pratt, David Martin

(57) **Abstract**

A lightweight hovermower comprising a hood (1) defining a cutting chamber (2). A motor (3) is mounted on the hood (1) in drivable engagement with an impeller (4) and a cutter blade arrangement (5, 6) within the cutting chamber (2). A motor cowl (8) is pivotally mounted on the hood (1), and a shaft (12) is fixed at one end (12a) to an upper end portion (8b) of the motor cowl. A handle (14) is fixed to the other end (12b) of the shaft (12), the handle being sized and shaped for single-handed operation.

## Description

This invention relates to a grass cutting machine, and in particular to a hovermower.

A hovermower is a grass cutting machine of the type having a cutting system which is rotatable about an axis which is substantially vertical relative to ground datum, and which is supported over ground datum by a cushion of air generated by an impeller. A hovermower may be provided with a grass collection receptacle for collecting grass cut by the machine. Alternatively, a lightweight hovermower, which has the advantages of being light and easy to use, does not have a grass collection receptacle, and cut grass is allowed to fall to the ground, for collection later or for providing a mulch.

The aim of the invention is to provide a lightweight hovermower which is easier to use and to manoeuvre than known lightweight hovermowers.

The present invention provides a lightweight hovermower comprising a hood defining a cutting chamber, a motor mounted on the hood in drivable engagement with an impeller and a cutter blade arrangement within the cutting chamber, a motor cowl pivotally mounted on the hood, a shaft fixed at one end to an upper end portion of the motor cowl, and a handle fixed to the other end of the shaft, wherein the handle is sized and shaped for single-handed operation.

Advantageously, the cowl is provided with a pair of downwardly-depending lugs which are pivotally mounted on a pair of upwardly-projecting lugs provided on the hood.

Preferably, the pivotal mounting of the cowl on the hood is such that the cowl can pivot through substantially 80° relative to the hood.

The cowl may be provided with a hand-engagable gripping member, preferably integrally formed with the cowl. In this case, the cowl may be a one-piece moulding made of a plastics material.

In a preferred embodiment, the handle is generally in the form of an ellipsoidal torus defining a hand grip.

Preferably, the motor is an electric motor, the operation of which is controlled by means of a switch housed within the hand grip of the handle. In this case, the switch may be controlled by an operating lever mounted on the handle within a hollow portion defined by the torus.

Conveniently, the hovermower further comprises a lock-off button mounted in the hand grip of the handle, the lock-off button being movable between a first operating position in which it prevents movement of the lever to actuate the switch, and a second operating position in which switch actuation is possible.

A hovermower constructed in accordance with the invention will now be described in greater detail, by way of example, with reference to the drawings, in which:-
Figure 1 is an exploded perspective view of the hovermower;
Figure 2 is a schematic part-sectional side elevation of the hovermower;
Figure 3 is an enlarged perspective view of part of the hovermower; showing the pivotal interconnection between its hood and its cowl; and
Figure 4 is an enlarged sectional view of the handle of the hovermower.

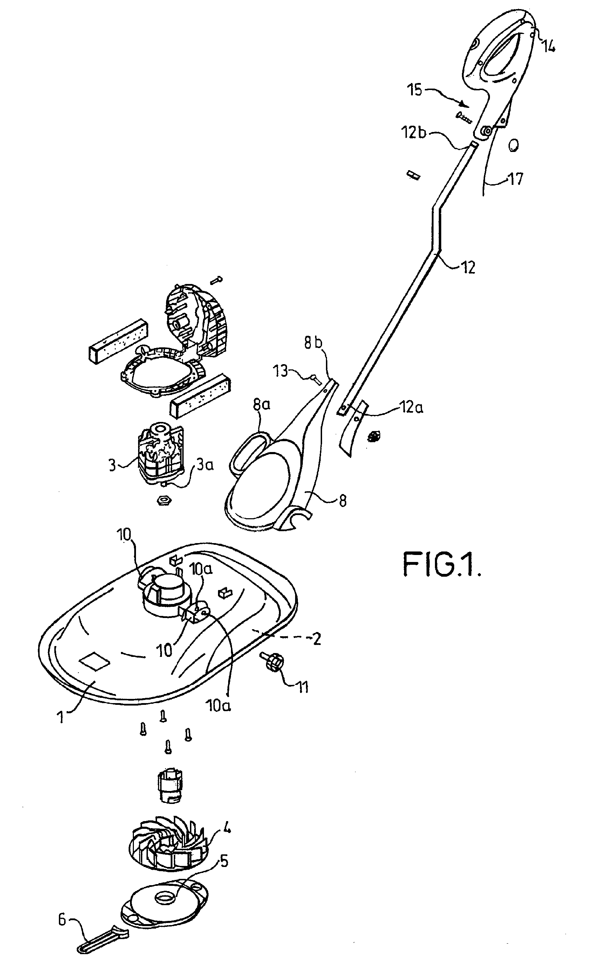

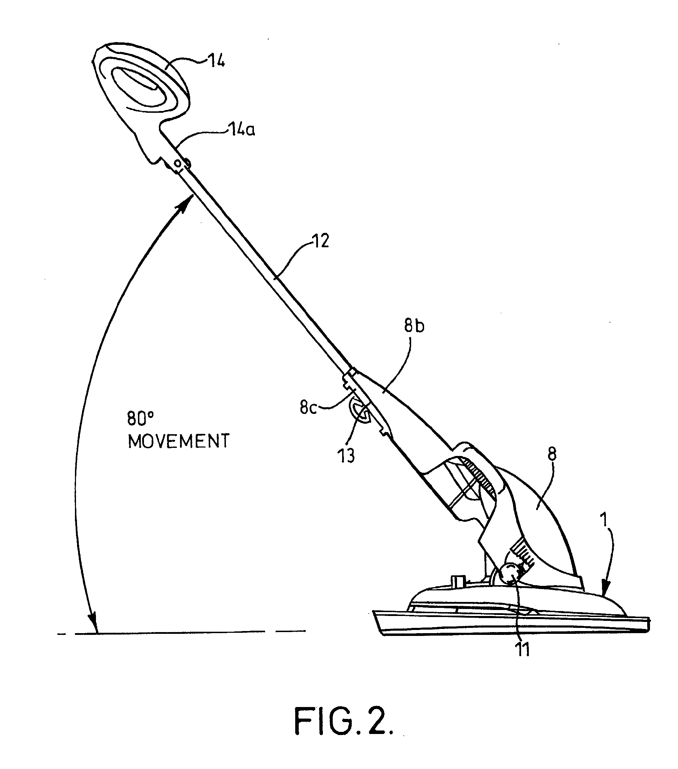

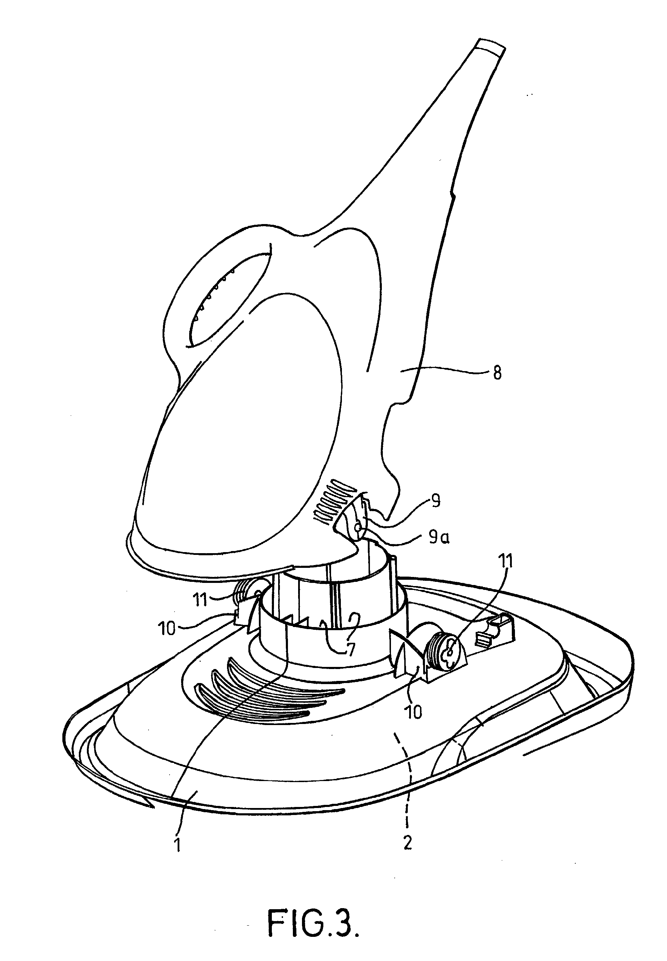

Referring to the drawings, Figures 1 and 2 show a lightweight hovermower having a hood 1 made of a plastics material such as polypropylene. The hood 1 defines an internal chamber 2 which is open to ground datum. An electric motor 3 is fixed to the upper surface of the hood 1, the motor having an output drive shaft 3a which extends through an aperture in the top of the hood. An impeller 4 and a cutter disc 5 are fixed to the shaft 3a for rotation therewith. A pair of cutter blades 6 (only one of which is shown), which are made of a plastics material such as nylon, are fixed, at diametrically-opposed positions, to the cutter disc 5. In use, the motor 3 drives the impeller 4 to draw air into the chamber 2 via apertures 7 (see Figure 3) in the hood 1, the impeller thereby pressurising air within the chamber so that the mower hovers on a cushion of air.

The motor 3 is housed within a motor cowl 8 which is made of a plastics material such as ABS. The cowl 8 is provided (see Figure 3) with two downwardly-extending lugs 9 by means of which the cowl is pivotally attached to pairs of upstanding lugs 10 provided on the upper surface of the hood 1 by means of pivot pins 11. Each of the pivot pins 11 passes through respective apertures 9a and 10a in the lugs 9 and 10. The pivotal connection between the hood 1 and the cowl 8 is such that the cowl can pivot in a generally vertical plane through about 80°. The cowl 8 is formed with an integral carrying handle 8a.

The lower end 12a of a steel tube 12 is clamped to the upper end portion 8b of the cowl 8 by means of a plate 8c and a bolt 13. The upper end 12b of the tube 12 is received within a complementary socket 14a provided on a handle 14 made of a plastics material such as ABS. The socket 14a is fixed to the upper tube end 12b by means of a bolt 15.

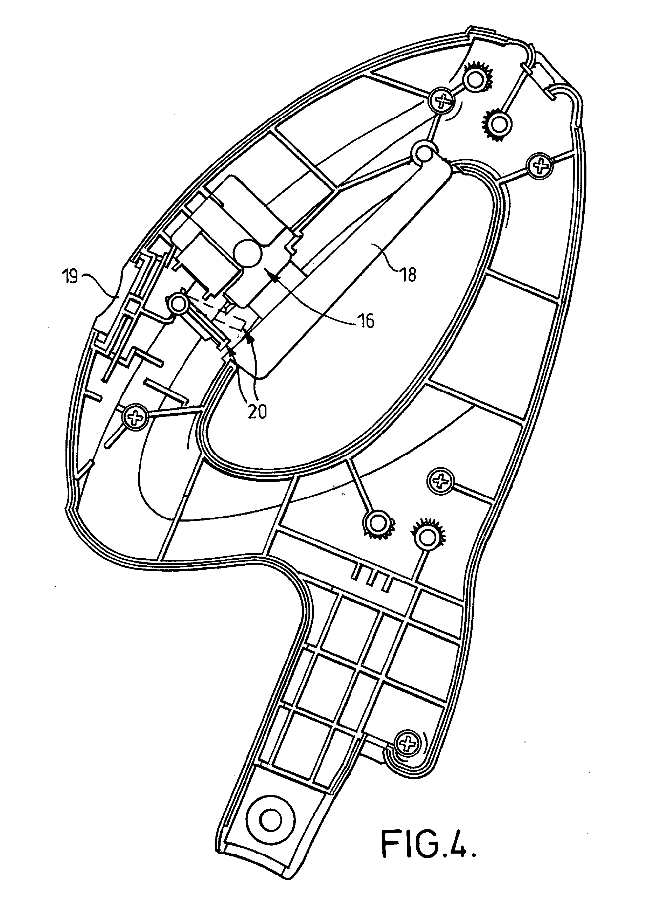

The handle 14 is generally ellipsoid in shape, and houses a switch, indicated generally by the reference numeral 16 (see Figure 4) for controlling the supply of power to the motor 3 from an electric supply cable 17 (see Figure 1). The switch 16 is actuated by a trigger 18 pivotally attached to the handle 14 within its hollow central portion. A lock-off button 19 is provided on the top 14b of the handle 14, the button acting, in a known manner, to prevent actuation of the switch 16 by the trigger 18 unless the button is depressed by an operator. Thus, depression of the button 19 pivots a lock arm 20 from the full-line position shown in Figure 4, in which position the trigger cannot be pulled up to actuate the switch 16, to the dash-line position in which switch actuation is possible.

It will be apparent that the hovermower described above has a number of advantages over known lightweight hovermowers. In particular, the hovermower of the invention has a single handle, enabling one-handed operation by a user. This is to be contrasted with known mowers which have a generally U-shaped handle having a pair of generally parallel arms which extend from the base of the u to the hood of the machine. Operation of such a known lightweight hovermower requires the operator to use both hands to control the machine. The one-handed operation of the lightweight hovermower of the invention facilitates manoeuvrability of the mower over the surface of a lawn, in a similar manner to the operation of an upright vacuum cleaner. Another advantage of the hovermower described above is that the handle can pivot vertically through a relatively large angle of about 80°, thereby facilitating manoeuvring of the mower under overhanging bushes and plants.

Yet another advantage of the mower of the invention is the provision of the integrated lock-off button on the control handle, this arrangement seen such as to be easily usable by the operator using one hand.

## Claims

1. A lightweight hovermower comprising a hood defining a cutting chamber, a motor mounted on the hood in drivable engagement with an impeller and a cutter blade arrangement within the cutting chamber, a motor cowl pivotally mounted on the hood, a shaft fixed at one end to an upper end portion of the motor cowl, and a handle fixed to the other end of the shaft, wherein the handle is sized and shaped for single-handed operation.

2. A hovermower as claimed in claim 1, wherein the cowl is provided with a pair of downwardly-depending lugs which are pivotally mounted on a pair of upwardly-projecting lugs provided on the hood.

3. A hovermower as claimed in claim 1 or claim 2, wherein the pivotal mounting of the cowl on the hood is such that the cowl can pivot through substantially 80° relative to the hood.

4. A hovermower as claimed in any one of claims 1 to 3, wherein the cowl is provided with a hand-engagable gripping member.

5. A hovermower as claimed in claim 4, wherein the gripping member is integrally formed with the cowl.

6. A hovermower as claimed in any one of claims 1 to 5, wherein the cowl is a one-piece moulding made of a plastics material.

7. A hovermower as claimed in any one of claims 1 to 6, wherein the handle is generally in the form of an ellipsoidal torus defining a hand grip.

8. A hovermower as claimed in claim 7, wherein the motor is an electric motor, the operation of which is controlled by means of a switch housed within the hand grip of the handle.

9. A hovermower as claimed in claim 8, wherein the switch is controlled by an operating lever mounted on the handle within a hollow portion defined by the torus.

10. A hovermower as claimed in claim 9, further comprising a lock-off button mounted in the hand grip of the handle, the lock-off button being movable between a first operating position in which it prevents movement of the lever to actuate the switch, and a second operating position in which switch actuation is possible.
